# EUROPEAN PATENT APPLICATION

(11) **EP 0 799 687 A2**
(43) Date of publication of application: **08.10.1997**
(21) Application number: 97302172.8
(22) Date of filing: 27.03.1997
(51) Int. Cl.: B29C 59/04, B32B 31/06, B32B 5/20, E04C 2/296

(54) **Method and apparatus for modifying bending characteristics of rigid laminated sheets or boards, sheets or boards produced thereby and a method of applying the sheets or boards to a wall surface**

(30) Priority: 01.04.1996 GB 9606875
(71) Applicant: Celotex Limited, London W5 5PR (GB)
(72) Inventor: Dakin, Roderick, Ipswich, Suffolk IP6 8QZ (GB)
(74) Representative: Bayliss, Geoffrey Cyril

(57) **Abstract**

The invention relates to a method of modifying the bending characteristics of a rigid laminated board (20) formed of an expanded plastic foam material (10) bonded between facing materials (12, 13). The board is heated or whilst being hot, is formed with at least one groove or pattern of grooves (24) on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board. Apparatus is provided for forming the required groove or pattern of grooves on one or both faces of the board. The invention also relates to a method of applying the board to a wall surface (28) to dry line the wall.

## Description

The invention relates to a method and apparatus for modifying bending characteristics of rigid laminated sheets or boards. The invention also relates to a method and apparatus for their production and to rigid laminated sheets or boards produced thereby. The invention further relates to a method of applying the sheets or boards to a wall surface.

The laminated sheets or boards are preferably heat or sound insulation sheets or boards, which may also be called panels, but will hereinafter be referred to as boards.

Heat insulation boards made from rigid closed cell plastic foams can be produced with or without facing sheets. Thermoplastic foams such as polystyrene are typically extruded without facings. Boards of thermosetting foams such as polyurethane can be cut from moulded blocks, i.e. without facings. All such boards can have facings bonded to them post manufacture.

However, more typically, the usual method of producing heat insulation boards from thermosetting foams is to react the foam core material between facing materials which self-bond to the foam, in a semi-continuous or continuous process. Facing materials may be aluminium foil, paper, glass tissue with or without coatings, e.g. polythene or bitumen, or various combinations of foil, paper or glass tissue.

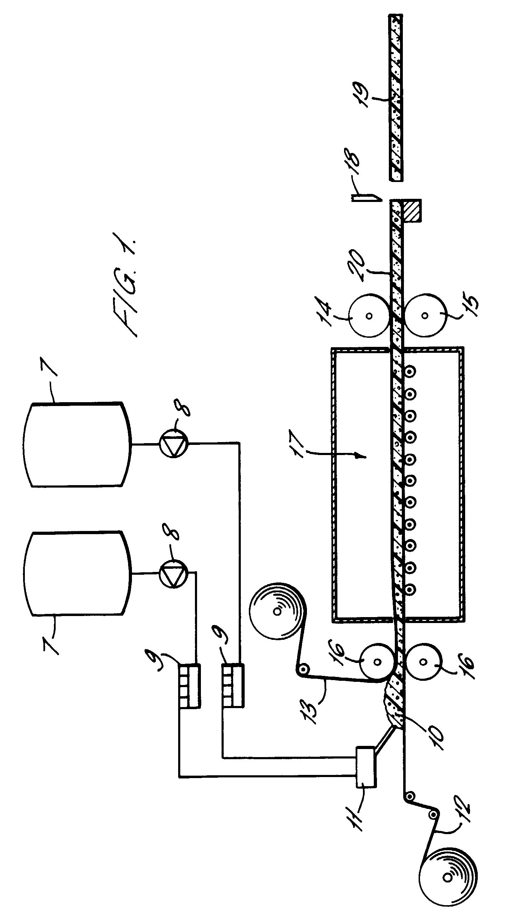

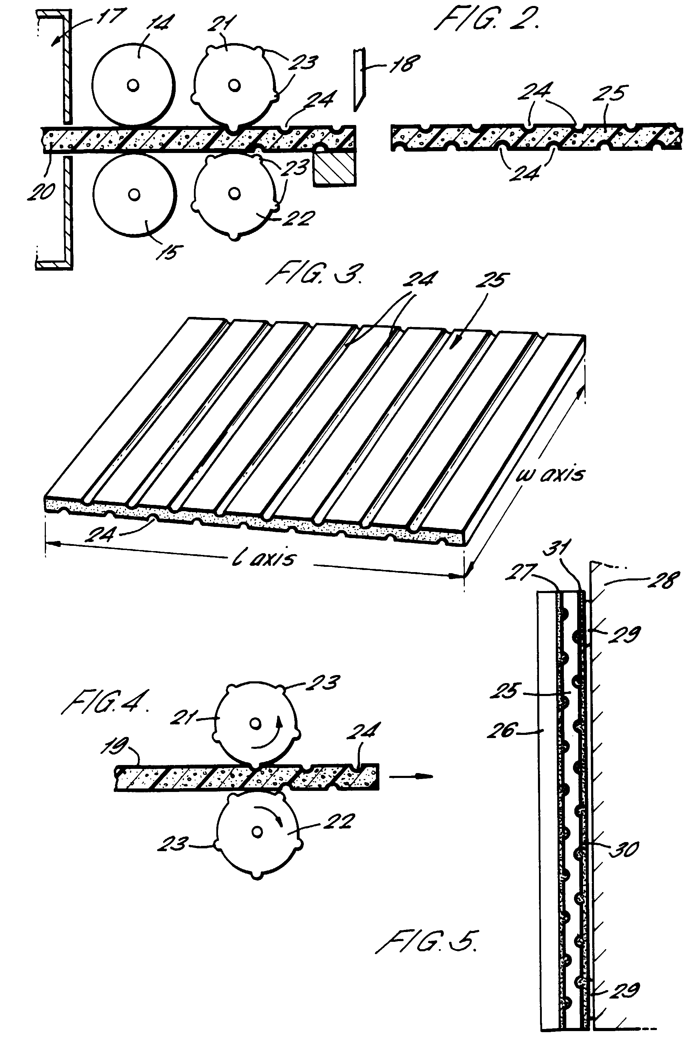

In European Patent Specification No. 0253221 there is described an apparatus in which a foamable chemical mixture is deposited on a lower continuous facing sheet and covered by an upper continuous facing sheet. The foamable mixture can be deposited by a stationary mixing head, or a mixing head which traverses either partially or completely across the width of the lower facing material. At this stage, glass or other fibre reinforcement can be included in the foamable mixture as the mixture is laid down. After deposition of the foamable mixture, the resultant composite advances into an expansion zone wherein the foam-forming mixture expands to the cured state. The expansion can be of the free rise type, for example, as illustrated in Figure 1 of European Patent Specification No. 0253221 in which the thickness of the composite is initially metered by the nip of two rotating rollers or the space between a doctor blade and a fixed plate. The thickness of the composite then increases as the foam core expands. Alternatively, the expansion can be of the restrained rise type, for example, as illustrated in Figure 3 of European Patent Specification No. 0253221. In this case, the composite is directed between a pair of spaced conveyor belts which preferably are spaced apart by a distance less than the thickness to which the composite would otherwise expand if it was allowed to foam unrestrictedly.

In the expansion zone, the composite is hot and is advantageously subjected to the influence of heat, e.g. hot air in an oven, under controlled conditions and cured to a rigid foam structure. Preferably downstream of the expansion zone, there may be a pair of driven pull rollers whereby rotation of the pull rollers draws the upper and lower facing materials and the foamable mixture therebetween through the apparatus and delivers the resultant laminate to cutting means which cuts the laminate into discrete lengths or boards. Alternatively, in the case of the expansion being of the restrained rise type, the pull force may be provided by the spaced conveyor belts between which the composite is directed.

To obtain adhesion to polyurethane or polyisocyanurate foams, most facing materials require a primer coating on the surface adjacent the foam material to promote adhesion with the foam material. Alternatively, for example in the case of polythene which is commonly used, thermal curing of the composite in the expansion zone results in softening the facer/foam interface and promotes adhesion of both the lower facer and the upper facer to the foam core. The expansion is initiated by heat generated in an exothermic reaction between the components of the foamable material and is regulated by heat added to the oven by hot air supplied thereto. There are also other types which are thermosetting in nature, e.g. epoxy, and chemically compatible with, for example, polyurethane and polyisocyanurate whereby heat at the foam/facer interface promotes the required adhesion. It will thus be appreciated that generally good adhesion is achieved through heat and a primer coating as required.

When the foam cools it contracts, and there may also be some curing contraction. The contraction of the foam will be considerably greater than the contraction of any facing material. Many facing materials, in particular aluminium foil, can be considered incompressible. Laminates having such facings therefore cool and cure with contractional forces frozen, i.e. in-built, into the foam core, particularly at the interface with each facer. It has been found that when such laminates are subjected to flexural forces, such as in a three point bend, failure is localised around the central point and the laminate remains bent when the force is removed. The extent of the contribution of the frozen-in forces to this failure, in which a permanent bend develops, are not known, but the forces are believed to be a significant factor, especially when the foam core is an expanded thermosetting plastics material. In the case of the laminate being a wall board, a permanent bend may prevent the board from being attached to a wall surface.

Sound insulation boards comprising an open cell plastic foam structure can be produced in a similar manner.

According to a first aspect of the invention there is provided a method of modifying the bending characteristics of a rigid laminated board formed of an expanded plastic foam material bonded between facing materials, wherein the board having been heated or whilst being hot is formed with at least one groove or pattern of grooves on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.

According to a second aspect of the invention there is provided a method of producing a rigid laminated board in which plastic foam material is bonded between two facing sheet materials, the method comprising depositing a plastic foam material or mix onto a lower facing material, covering the plastic foam material or mix with an upper facing material, and causing the foam material or mix to expand and become bonded to both facing materials in a cured state, wherein subsequent to the expansion of the plastic foam material or mix, the composite whilst hot is formed with at least one groove or pattern of grooves on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.

Preferably the board is formed with a plurality of said grooves spaced apart in parallel relation on one or both faces of the board. Said grooves are preferably formed on both faces of the board, the grooves on each face being in parallel offset relation to the grooves on the other face of the board. In particular, both the depth and width dimensions of the grooves are restricted so that the board is not able to fold about the grooves formed therein, thereby maintaining the rigid characteristic of the board.

Preferably the plastic foam material is thermosetting plastics material.

The invention also provides an apparatus for modifying the bending characteristics of a rigid laminated board formed of an expanded plastic foam material bonded between facing materials, wherein the apparatus includes means for forming at least one groove or a pattern of grooves on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.

The invention further provides an apparatus for producing a rigid laminated board in which plastic foam material is bonded between two facing sheet materials, the apparatus comprising a supply of plastic foam material or mix of materials, a lower facing sheet material on which the plastic foam material or mix is deposited, an upper facing material for covering the plastic foam material or mix, and means for allowing the plastic foam material or mix to expand between the facing materials and become bonded thereto in a cured state, wherein the apparatus includes means for forming at least one groove or a pattern of grooves on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.

Preferably the means for forming the groove or grooves on a respective face of the board is at least one ribbed roller, the roller having an arrangement of ribs corresponding to the groove or pattern of grooves to be formed.

In a preferred embodiment of the invention, rigid laminated boards are formed in a continuous process, the apparatus including an expansion zone in which the plastic foam material or mix expands and becomes bonded to the facing materials in a cured state, and the groove forming means are provided downstream of the expansion zone prior to means for cutting the composite into discrete boards.

The groove forming means are preferably a pair of rollers between which the composite is passed, each roller providing the necessary arrangement of ribs corresponding to the groove or pattern of grooves with the desired depth and width dimensions to be formed in the adjacent face of the composite.

Each groove forming roller may have a plurality of parallel, spaced apart ribs extending circumferentially and/or longitudinally of the roller, or a diamond pattern of ribs thereon.

The invention still further provides a rigid laminated board modified or produced by a method or apparatus as defined above, e.g. an insulation board. Accordingly, the invention provides a rigid laminated board comprising plastic foam material bonded between two facing sheet materials, wherein the composite board is formed with at least one groove or pattern of grooves on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.

The invention yet still further provides a method of applying a rigid laminated board as defined above to a wall surface to dry line the wall, wherein the board is laminated by adhesive to a sheet of plasterboard, and the exposed facing sheet of the board is adhered to a wall surface by applying dabs of plaster on the wall surface and an adhesive between said facing sheet and the dabs of plaster.

By way of example, a specific embodiment in accordance with the invention will be described with reference to the accompanying diagrammatic drawings in which:-
Figure 1 illustrates a conventional apparatus for producing rigid laminated heat insulation boards in a continuous process;
Figure 2 shows a modification of the apparatus of Figure 1 in which groove forming rollers are provided in accordance with the invention;
Figure 3 illustrates a heat insulation board formed by using the groove forming rollers of Figure 2, which has flexibility when bent along the 1 axis; and
Figure 4 illustrates the board of Figure 3 laminated to a sheet of plasterboard and applied to a wall surface to dry line the wall.

Referring to Figure 1, there is illustrated a conventional apparatus of the free rise type, in which a foamable chemical mixture 10, e.g. polyurethane or polyisocyanurate is fed from the required number of tanks 7 containing separate ingredients of the mixture, via respective supply pumps 8 and metering pumps 9, to a mixing head 11 and then deposited on a lower continuous facing sheet 12 of aluminium foil which in this embodiment is the outer layer. For convenience, two tanks 7 are illustrated but, in practice, three or more may be required. Typically, the sheet 12 may be plain aluminium foil or a bilaminate or a trilaminate of aluminium foil and paper, with an appropriate coating of primer, which may be epoxy in the case of the inner face being aluminium, or polythene if the inner face is paper. The mixture 10 is also covered by a corresponding upper continuous facing sheet 13 of similar composition to the lower sheet 12. Alternatively, other forms of facing sheet and appropriate coating, if required, may be employed.

The composite of facing sheets 12, 13 and intermediate mixture 10 is pulled by a pair of drive rollers 14, 15 between the nip of metering rollers 16 and through an expansion zone 17. In this embodiment, within the expansion zone or oven 17 the composite is allowed to expand in a free rise process subject to an initial thickness control determined by the metering rollers 16. Alternatively, a known restrained rise process may be employed in which the composite is passed between a pair of conveyor belts within the expansion zone, the belts being spaced apart by a distance less than the thickness to which the composite would otherwise expand if it was allowed to foam unrestrictedly.

As explained above, thermal curing of the composite in the expansion zone 17 results in promoting adhesion between the primer coated face of each facing sheet 12, 13 and the foam core 10. The expansion is initiated by heat generated in an exothermic reaction between the components of the foamable chemical mixture and is preferably regulated by hot air supplied to the expansion zone.

Downstream of the expansion zone the continuous rigid laminated board 20 so produced passes through a cooling zone prior to reaching cutting means 18 which cuts the continuous composite into discrete boards 19.

In this embodiment of the invention, the continuous board 20 is post formed whilst still hot by a pair of ribbed rollers 21, 22 (Figure 2) which, in this embodiment, are provided in addition to and downstream of the driven rollers 14, 15. Alternatively, the ribbed rollers 21, 22 may replace the drive rollers 14, 15. Each roller 21, 22 has a plurality of ribs 23 extending longitudinally of the roller in parallel, spaced apart relation. The ribs 23 of the upper roller 21 are offset relative to the ribs of the lower roller 22. Thereby as the board passes between the nip of the rollers 21, 22, each roller will rotate, or is rotating, and forms a succession of transverse grooves 24 in the adjacent surface of the board 20. The resultant embossed insulation board 25 is shown in Figure 3. The shape, depth and frequency of the grooves can be infinitely variable, whilst maintaining the rigidity of the board. In particular, the depth and width dimensions of the grooves 24 are restricted so that the board is not able to fold about the grooves formed therein, thereby maintaining the rigid characteristic of the board. The product or board 25 is thus embossed on both surfaces, as required, in accordance with the arrangement of ribs on the rollers 21, 22. If desired, the grooves 24 on one surface of the board 25 may be aligned with the grooves on the other surface instead of being offset. In either case, the product is made more flexible when bent along the ℓ axis (Figure 3) than an equivalent board would bend without any grooves 24.

A similar effect to allow for bending the product along the *w* axis, may be achieved by forming corresponding grooves extending longitudinally of the board. To form such grooves, the rollers 21, 22 would have an arrangement of ribs extending circumferentially instead of longitudinally of each roller. Moreover, a combined effect of bending about both the *ℓ* axis and the *w* axis would be achieved by using rollers 21, 22 having a square or rectangular pattern of ribs. Alternatively, a diamond pattern of ribs may be effective to produce a similar effect.

It has been found that the provision of the grooves 24 has the beneficial effect of spreading flexural forces subjected during bending of the board in the respective direction, which at least minimises any permanent bend which is created in the product. The grooves also serve to reduce the frozen-in stresses over a given dimension, which result from contraction of the foam as it cools when the foam is a thermosetting plastics material. In certain circumstances just one groove may be sufficient, but preferably a plurality of grooves are formed in one or both faces of the board. The optimum number, arrangement and dimensions of the grooves 24 will depend on the specific materials used for the facing sheets 12, 13 and the foam core 10.

Whilst the invention has been specifically described in relation to a continuous process of production of laminated heat insulation sheets or boards, the invention is also applicable to the production or embossing of other product, e.g. sound insulation sheets or boards having an open cell plastic foam. It is further envisaged that, within the scope of the invention, the grooves may be applied in several different ways. For example:
1. Embossing rollers 21, 22 may be employed subsequent to the discrete boards being cut.
2. The grooves 24 may be moulded during semi or continuous manufacture.
3. Single boards 25 may be manufactured separately, i.e. not cut from a continuous board.
4. The grooves 24 may be machined in the board after manufacture.
5. The grooves 24 may be moulded after the manufacture of boards employing heat-thermoplastic foams.

More particularly, with reference to Figure 4, the board 25 of Figure 3 may be produced by passing a previously formed, hot or preheated plain faced board 19 between the nip of a pair of ribbed rollers 21, 22, thereby embossing the offset grooves 24 or other required pattern of grooves in its opposed faces.

For preheating the board 19, the board or a succession of boards 19, may be passed through an oven equivalent to the oven 17 of Figures 1 and 2.

If it is required to emboss a groove or pattern of grooves in one face only of a board 19, an appropriate single roller 21 or 22 is provided both in the case of the apparatus of Figure 2 and the apparatus of Figure 4.

Similarly, the rollers 21, 22 may be replaced by other groove forming means if the desired groove or grooves 24 in one or both faces of the board 25 is to be provided, e.g. by machining, in a different manner.

In each case, the starting board 19, e.g. an insulation board, is of laminated construction having an expanded plastic foam material bonded between facing materials and when transformed by the provision of a groove or grooves 24 in one or both faces has its bending characteristics modified in a manner which is sufficient to give the board the required flexibility in one or more directions, whilst maintaining the rigidity of the board. The resultant board is thereby able to resist developing a permanent bend if the board is bent in the respective direction.

In use, individual boards 25 may be laminated to a sheet of plasterboard 26 of corresponding size with an intermediate layer 27 of suitable adhesive, if required. The combined insulation board and plasterboard is then attached to a wall surface 28, for example, for dry lining of the wall in the conventional manner by using dabs of plaster 29 between the exposed face of the insulation board and the wall surface as shown in Figure 4. Likewise, the inside surface of the combined insulation board and plasterboard, i.e. the exposed face of the facing sheet 30 which, in use, is applied to the dabs of plaster 29, may be provided with an intermediate layer 31 of suitable adhesive to assist adhesion between the facing sheet and the plaster.

The need for the ntermediate layers of adhesive 27, 31 depends on the macing material employed in the manufacture of the insulation board 25. For example, facing materials which have either a natural affinity to gypsum plaster or provide a mechanical key, such as paper or glass fibre, may not require a coating of primer on their outer face. However, facings having smooth surfaces consisting of materials which have no or little affinity to gypsum plaster, e.g. bitumen, polythene or aluminium foil do require a primer adhesive coating. In the case of the preferred product in which the facings employed are either plain aluminium foil or a layered composite of aluminium foil and paper with aluminium foil on the outside, it has been found that a coating comprising a water based emulsion of acrylic polymers successfully promotes wettability and adhesion to gypsum plaster and indeed cement mortar.

## Claims

1. A method of modifying the bending characteristics of a rigid laminated board (20)formed of an expanded plastic foam material (10) bonded between facing materials (12, 13), wherein the board having been heated or whilst being hot, is formed with at least one groove or pattern of grooves (24) on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.

2. A method of producing a rigid laminated board (20) in which plastic foam material (10) is bonded between two facing sheet materials (12, 13), the method comprising depositing a plastic foam material or mix onto a lower facing material, covering the plastic foam material or mix with an upper facing material, and causing the foam material or mix to expand and become bonded to both facing materials in a cured state, wherein subsequent to the expansion of the plastic foam material or mix, the combosite whilst hot is formed with at least one groove or pattern of grooves (24) on one or both faces of the board, the depth and width dimensions of the groove or grooves being sufficient to give the board flexibility in one or more directions to resist the board developing a permanent bend as a result of the board being bent in the respective direction, whilst maintaining the ridigity of the board.

3. A method as claimed in Claim 1 or Claim 2, wherein the board (20) is formed with a plurality of said grooves (24) spaced apart in parallel relation on one or both faces of the board.

4. A method as claimed in Claim 3, wherein said grooves are formed on both faces of the board, the grooves on each face being in parallel offset relation to the grooves on the other face of the board.

5. A method is claimed in Claim 1 or Claim 2, wherein the board is formed with a square, rectangular or diamond pattern of grooves on one or both faces of the board.

6. A method as claimed in any one of the preceding claims, wherein the groove or grooves (24) on the respective face of the board are formed by a roller (21; 22) having a corresponding rib or ribs (23).

7. A method as claimed in any one of the preceding claims, wherein the groove or grooves are formed as a step in a continuous process of producing the composite, prior to the composite so formed being cut into discrete boards.

8. A method as claimed in any one of the preceding claims, wherein the plastic foam material is a thermosetting plastics material.

9. Apparatus for modifying the bending characteristics of a rigid laminated board (20) formed of an expanded plastic foam material (10) bonded between facing materials (12, 13), wherein the apparatus includes means for forming at least one groove or a pattern of grooves (24) on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.

10. Apparatus for producing a rigid laminated board (20) in which plastic foam material (10) is bonded between two facing sheet materials (12, 13), the apparatus comprising a supply of plastic foam material or mix of materials, a lower facing sheet material on which the plastic foam material or mix is deposited, an upper facing material for covering the plastic foam material or mix, and means for allowing the plastic foam material or mix to expand between the facing materials and become bonded thereto in a cured state, wherein the apparatus includes means (21, 22)for forming at least one groove or a pattern of grooves (24) on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.

11. Apparatus as claimed in Claim 9 or Claim 10, wherein the means for forming the groove or grooves (24) on a respective face of the board is at least one ribbed roller (21; 22), the roller having an arrangement of ribs (23) corresponding to the groove or pattern of grooves to be formed.

12. Apparatus as claimed in Claim 11, wherein the means for forming the groove or grooves (24) are a pair of rollers (21, 22) between which the board is passed, each roller having the necessary arrangement of ribs (23).

13. Apparatus as claimed in any one of Claims 9 to 12 for forming laminated boards in a continuous process, wherein the apparatus includes an expansion zone in which the plastic material or mix (10) expands and becomes bonded to the facing materials (12, 13)in a cured state, and the groove forming means are provided downstream of the expansion zone prior to means for cutting the composite into discrete boards.

14. Apparatus as claimed in Claim 13, wherein the groove forming means are a pair of rollers (21, 22) between which the composite is passed, each roller providing the necessary arrangement of ribs (23) corresponding to the groove or pattern of grooves (24) to be formed in the adjacent face of the composite.

15. Apparatus as claimed in Claim 14, wherein the groove forming rollers (21, 22) are in addition to driven rollers (14, 15) which act to pull the composite through the expansion zone.

16. Apparatus as claimed in Claim 14 or Claim 15, wherein each groove forming roller (21; 22) has a plurality of parallel, spaced apart ribs (23) extending circumferentially and/or longitudinally of the roller, or a diamond pattern of ribs thereon.

17. A rigid laminated board modified or produced by a method or apparatus as claimed in any one of the preceding claims.

18. A rigid laminated board as claimed in Claim 17, wherein the board is an insulation board (25).

19. A method of applying a rigid laminated board as claimed in Claim 17 or Claim 18 to a wall surface (28) to dry line the wall, wherein the board (25) is laminated by adhesive to a sheet of plasterboard (26), and the exposed facing sheet (30) of the board is adhered to a wall surface by applying dabs of plaster (29) on the wall surface and an adhesive (31) between said facing sheet and the dabs of plaster.

20. A rigid laminated board comprising plastic foam material (10) bonded between two facing sheet materials (12, 13), wherein the composite board (20) is formed with at least one groove or pattern of grooves (24) on one or both faces of the board, the depth and width dimensions of the groove or grooves being sufficient to give the board flexibility in one or more directions to resist the board developing a permanent bend as a result of the board being bent in the respective direction, whilst maintaining the rigidity of the board.
